(19) Europäisches Patentamt

European Patent Office

Office européen des brevets

(11) **EP 1 105 998 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(51) Int Cl.⁷: **H04L 9/30**, H04L 9/08, H04L 9/32

(21) Anmeldenummer: **99952301.2**

(22) Anmeldetag: **04.08.1999**

(86) Internationale Anmeldenummer:
**PCT/DE99/02443**

(87) Internationale Veröffentlichungsnummer:
**WO 00/011833 (02.03.2000 Gazette 2000/09)**

(54) **VERFAHREN UND ANORDNUNG ZUR BILDUNG EINES GEHEIMEN KOMMUNIKATIONSSCHLÜSSELS ZU EINEM ZUVOR ERMITTELTEN ASYMMETRISCHEN KRYPTOGRAPHISCHEN SCHLÜSSELPAAR**

METHOD AND DEVICE FOR CREATING A SECRET COMMUNICATION KEY FOR A PREDETERMINED ASYMMETRIC AND CRYPTOGRAPHIC KEY-PAIR

PROCEDE ET DISPOSITIF PERMETTANT DE COMPOSER UNE CLE SECRETE DE COMMUNICATION POUR UNE PAIRE DE CLES DE CHIFFREMENT ASYMETRIQUE PREALABLEMENT DETERMINEE

(84) Benannte Vertragsstaaten:
**DE FR GB**

(30) Priorität: **18.08.1998 DE 19837405**

(43) Veröffentlichungstag der Anmeldung:
**13.06.2001 Patentblatt 2001/24**

(73) Patentinhaber: **Infineon Technologies AG 81669 München (DE)**

(72) Erfinder:
• **HOFFMANN, Gerhard D-81547 München (DE)**
• **LUKAS, Klaus D-81739 München (DE)**

(74) Vertreter: **Zinkler, Franz Schoppe, Zimmermann, Stöckeler & Zinkler Postfach 246 82043 Pullach bei München (DE)**

(56) Entgegenhaltungen:
**EP-A- 0 534 420          WO-A-99/33219**

• **CHRISTOPH RULAND: "Informationssicherheit in Datennetzen" 1993 , DATACOM-VERLAG , BERGHEIM (DEUTSCHLAND) XP000863430 in der Anmeldung erwähnt Seite 79 -Seite 85**
• **CHRISTOPH RULAND: "Informationssicherheit in Datennetzen" 1993 , DATACOM-VERLAG , BERGHEIM (DEUTSCHLAND) XP000863429 in der Anmeldung erwähnt Seite 68 -Seite 73**

**Beschreibung**

Die Erfindung betrifft ein Verfahren und eine Anordnung zur Bildung eines geheimen Kommunikationsschlüssels zu einem zuvor ermittelten asymmetrischen Schlüsselpaar.

Die Bildung eines asymmetrischen kryptographischen Schlüsselpaars ist aus [1] bekannt.

Bei diesem Verfahren wird das RSA-Verfahren zur Bildung eines kryptographischen Schlüsselpaars, welches einen geheimen Schlüssel sowie einen korrespondierenden öffentlichen Schlüssel umfaßt, gebildet.

Der geheime Schlüssel ist nur dem Benutzer bekannt, der öffentliche Schlüssel kann allen Teilnehmern eines Kommunikationsnetzes bekannt gemacht werden.

Bei der Erstellung einer digitalen Signatur zum Schutz der Authentizität und Integrität elektronischer Daten unterschreibt der Benutzer die Daten mit seinem geheimen Schlüssel. Die Verifikation der unterschriebenen digitalen Signatur erfolgt unter Verwendung des zu dem geheimen Schlüssels korrespondierenden öffentlichen Schlüssel, wodurch die Authentizität bzw. Integrität der digitalen Signatur von allen Kommunikationspartnern überprüft werden kann, die Zugriff auf den öffentlichen Schlüssel haben.

Die oben beschriebene sogenannte Public-Key-Technologie findet insbesondere in der digitalen Kommunikation innerhalb eines Rechnernetzes (eine vorgebbare Anzahl von Rechnereinheiten, die über ein Kommunikationsnetz miteinander verbunden sind) Anwendung.

Bei dem aus [1] bekannten Verfahren ist der Schutz des geheimen Schlüssels vor unberechtigter Kenntnisnahme eines Dritten für die Sicherheit der digitalen Signatur von essentieller Bedeutung.

Aus [2] ist es bekannt, den geheimen Schlüssel auf einem externen Medium zur Speicherung von Daten, beispielsweise einer Chipkarte, einer Diskette, etc. oder auf einer Festplatte zu speichern, wobei Schlüsseldaten unter Verwendung eines persönlichen Identifizierungscodes (Personal Identification Number, PIN) oder eines Paßworts, mit dem jeweils die Schlüsseldaten verschlüsselt werden, geschützt werden. Bei Nutzung dieser externen Medien sind jedoch Zugriffe auf die lokalen Ressourcen eines Benutzers notwendig. Dies ist jedoch gerade bei einer netzorientierten Infrastruktur von Netzcomputern oder Java-Applikationen nicht gewünscht.

Unter einem Netzcomputer ist ein Rechner zu verstehen, der mit weiteren Rechnern vernetzt ist.

Unter einer Java-Applikation ist ein Programm zu verstehen, welches in der Programmiersprache Java geschriebene Programme enthält.

Somit weist das aus [2] beschriebene Verfahren den Nachteil auf, daß der geheime Schlüssel auf einem externen Medium gespeichert werden muß und somit der geheime Schlüssel vor Mißbrauch nur schwer schützbar ist.

Eine Übersicht über Hash-Funktionen ist in [3] zu finden. Unter einer Hash-Funktion ist eine Funktion zu verstehen, bei der es nicht möglich ist, zu einem gegebenen Funktionswert einen passenden Eingangswert zu berechnen. Ferner wird einer beliebig langen Eingangszeichenfolge eine Ausgangszeichenfolge fester Länge zugeordnet. Des weiteren können für die Hash-Funktion zusätzliche Eigenschaften gefordert werden. Eine solche zusätzliche Eigenschaft ist Kollisionsfreiheit, d.h. es darf nicht möglich sein, zwei verschiedene Eingangszeichenfolgen zu finden, die dieselbe Ausgangszeichenfolge ergeben.

Beispiele einer Hash-Funktion sind das Verfahren gemäß dem MD-2-Standard, das Verfahren gemäß dem MD-5-Standard, der Data Encryption Standard (DES), welcher ohne Verwendung eines Schlüssels durchgeführt wird, oder auch jede andere beliebige Hash-Funktion.

Ein als Verfahren nach Miller-Rabin bezeichnetes Verfahren, mit dem für eine Zahl überprüft werden kann, ob diese eine Primzahl darstellt, ist aus [4] bekannt.

Die EP-A-0 534 420 offenbart ein Verfahren zur Bildung eines kryptographischen Schlüsselpaares mit einem privaten Schlüssel und einem öffentlichen Schlüssel und zur Verwendung eines Startwerts. Aus einem Paßwort wird ein erster Startwert gebildet. Anschließend wird aus dem Startwert ein erstes Schlüsselpaar mit einem ersten privaten Schlüssel und einem korrespondierenden ersten öffentlichen Schlüssel gebildet. Darüber hinaus wird aus einer Zufallszahl ein zweiter Startwert gebildet. Anschließend wird aus dem zweiten Startwert ein zweites Schlüsselpaar mit einem zweiten privaten Schlüssel und einem korrespondierenden zweiten öffentlichen Schlüssel gebildet. Somit wird bei der Bildung des ersten Schlüsselpaares und bei der Bildung des zweiten Schlüsselpaares jeweils aus einem entsprechenden Startwert sowohl der private als auch der öffentliche Schlüssel des jeweiligen Schlüsselpaares gebildet.

Somit liegt der Erfindung das Problem zugrunde, einen geheimen Kommunikationsschlüssel zu einem zuvor ermittelten asymmetrischen kryptographischen Schlüsselpaar zu bilden, bei dem der geheime Schlüssel des asymmetrischen Schlüsselpaars nicht dauerhaft gespeichert werden muß.

Das Problem wird durch das Verfahren sowie durch die Anordnung mit den Merkmalen der unabhängigen Patentansprüche gelöst.

Bei dem Verfahren zur Bildung eines geheimen Kommunikationsschlüssels zu einem zuvor ermittelten asymmetrischen kryptographischen Schlüsselpaar, welches einen geheimen Schlüssel sowie einen korrespondierenden öffentlichen Schlüssel umfaßt, wurde bei der Ermittlung des Schlüsselpaars ein vorgebbarer Startwert verwendet. Der Startwert wird einem Benutzer zur Verfügung gestellt. Der Benutzer gibt den Startwert in den Rechner ein und unter Verwendung des Startwerts wird der geheime Kommunikationsschlüssel gebildet. Der geheime Kommunikationsschlüssel und der öffentliche Schlüssel bilden ein Kommunikationsschlüsselpaar.

Die Anordnung zur Bildung eines geheimen Kommunikationsschlüssels zu einem zuvor ermittelten asymmetrischen kryptographischen Schlüsselpaar, welches einen geheimen Schlüssel sowie einen korrespondierenden öffentlichen Schlüssel umfaßt, weist einen Prozessor auf, der derart eingerichtet ist, daß folgende Schritte durchführbar sind:

- bei der Ermittlung des Schlüsselpaars wurde ein vorgebbarer Startwert verwendet,
- der Startwert wird einem Benutzer zur Verfügung gestellt,
- der Startwert wird von dem Benutzer in den Rechner eingegeben,
- unter Verwendung des Startwerts wird der geheime Kommunikationsschlüssel gebildet, wobei der geheime Kommunikationsschlüssel und der öffentliche Schlüssel ein Kommunikationsschlüsselpaar bilden.

Ferner ist ein Eingabemittel vorgesehen zur Eingabe des Startwerts durch den Benutzer.

Durch die Erfindung wird es möglich, den geheimen Schlüssel löschen zu können, ohne auf die starke Kryptographie der Public-Key-Technologie verzichten zu müssen.

Anschaulich kann der Startwert als ein von dem Benutzer vorgegebener oder auch zentral vorgegebener persönlicher Identifikationscode (Personal Identification Number PIN) oder als Paßwort angesehen werden, den der Benutzer in den Rechner eingibt. Nach Eingabe des Paßworts bzw. der PIN wird unter Verwendung der des Paßworts bzw. der PIN als Startwert der geheime Kommunikationsschlüssel, d.h. der verglichen mit dem geheimen Schlüssel gleichlautende Schlüssel gebildet, der ein Schlüsselpaar, das Kommunikationsschlüsselpaar, gemeinsam mit dem öffentlichen Schlüssel bildet.

Auf diese Weise wird mit der Erfindung eine Verschmelzung der für den Benutzer eines üblichen Rechnernetzes bzw. eines üblichen Rechners gewohnten Paßwort-Technologie mit der starken Kryptologie erreicht, ohne daß erhebliche Anstrengungen unternommen werden müssen, um geheimes Schlüsselmaterial dauerhaft zu speichern.

Bevorzugte Weiterbildungen der Erfindung ergeben sich aus den abhängigen Ansprüchen.

In einer Weiterbildung der Erfindung ist es vorgesehen, auf den Startwert eine Hash-Funktion anzuwenden, womit ein Wert gebildet wird, der schließlich zur Schlüsselgenerierung verwendet wird.

Weiterhin können zusätzliche Daten bei der Schlüsselgenerierung verwendet werden, die bevorzugt den Benutzer selbst charakterisieren.

Bevorzugt wird zur Bildung des kryptographischen Schlüssels das RSA-Verfahren zur Schlüsselgenerierung verwendet.

Als Hash-Funktion kann das Verfahren gemäß dem MD-5-Standard, dem MD-2-Standard oder auch dem Data Encryption Standard (DES), eingesetzt als Einweg-Funktion eingesetzt werden.

Das Kommunikationsschlüsselpaar kann sowohl zur Verschlüsselung oder zur Integritätssicherung elektronischer Daten, zur Bildung einer digitalen Signatur über elektronische Daten oder auch zur Authentifikation eines Benutzers eingesetzt werden, allgemein für eine beliebige kryptographische Operation, bei der die Public-Key-Technologie eingesetzt wird, wobei das gebildete Kommunikationsschlüsselpaar verwendet wird.

Zur Beschleunigung des Verfahrens ist es in einer Ausgestaltung vorteilhaft, bei der Bildung des geheimen Schlüssels einen Index zu speichern, der im weiteren als Beschleunigungskennzahl bezeichnet wird. Mit der Beschleunigungskennzahl wird angegeben, wie oft Zahlen, ausgehend von dem Startwert, daraufhin überprüft worden sind, ob die jeweilige Zahl eine Primzahl darstellt oder nicht.

Zur Überprüfung der Eigenschaft, ob eine Zahl eine Primzahl darstellt, wird vorzugsweise das Verfahren nach Miller-Rabin eingesetzt.

Ein Ausführungsbeispiel der Erfindung ist in den Figuren dargestellt und wird im weiteren näher erläutert.

Es zeigen

Figur 1    ein Ablaufdiagramm, in dem die Verfahrensschritte des Ausführungsbeispiels dargestellt sind;

Figur 2    eine Skizze, in dem ein Rechnernetz mit einer Vielzahl miteinander gekoppelter Rechner dargestellt ist;

Figur 3    eine symbolische Skizze, in der die Vorgehensweise zur Ermittlung einer Primzahl ausgehend von einem Startwert dargestellt ist.

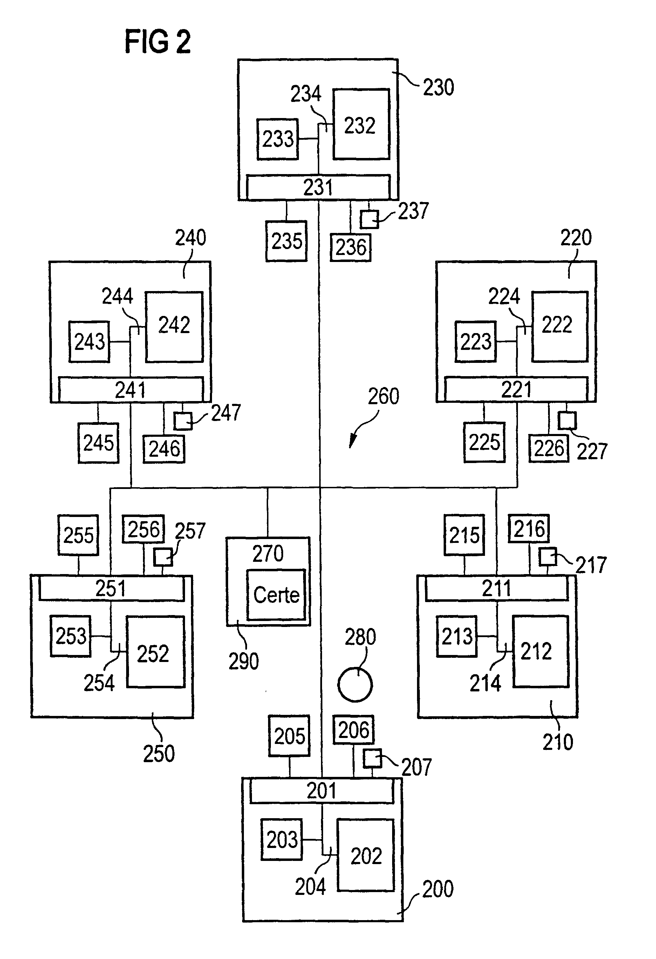

**Fig.2** zeigt eine Vielzahl von Rechnern 200, 210, 220, 230, 240, 250, die über ein Kommunikationsnetz 260 miteinander verbunden sind. Jeder Rechner 200, 210, 220, 230, 240, 250 weist jeweils mehrere Eingabemittel, d.h. eine Tastatur 206, 216, 226, 236, 246, 256, eine Maus 207, 217, 227, 237, 247, 257 oder einen Scanner (nicht dargestellt) oder auch eine Kamera (nicht dargestellt) auf. Über das jeweilige Eingabemittel wird über eine Eingangs-/Ausgangsschnittstelle 201, 211, 221, 231, 241, 251 einem Speicher 202, 212, 222, 232, 242, 252 die eingegebene Information zugeführt und gespeichert. Der 202, 212, 222, 232, 242, 252 Speicher ist mit der Eingangs-/Ausgangsschnittstelle 201, 211, 221, 231, 241, 251 über einen Bus 204, 214, 224, 234, 244, 254 verbunden. Ebenso mit dem Bus 204, 214, 224, 234, 244, 254 verbunden ist ein Prozessor 203, 213, 223, 233, 243, 253, der derart eingerichtet ist, daß die im weiteren beschriebenen Verfahrensschritte durchführbar sind.

Die Rechner 200, 210, 220, 230, 240, 250 kommunizieren über das Kommunikationsnetz 260 gemäß dem Transport Control Protocol/Internet Protocol (TCP/IP).

Ferner ist in dem Kommunikationsnetz 260 eine Zertifizierungseinheit 270 vorgesehen, mit der für jeweils einen öffentlichen Schlüssel ein Zertifikat ausgestellt wird, so daß der öffentliche Schlüssel vertrauenswürdig ist für eine Kommunikation auf der Basis der Public-Key-Technologie.

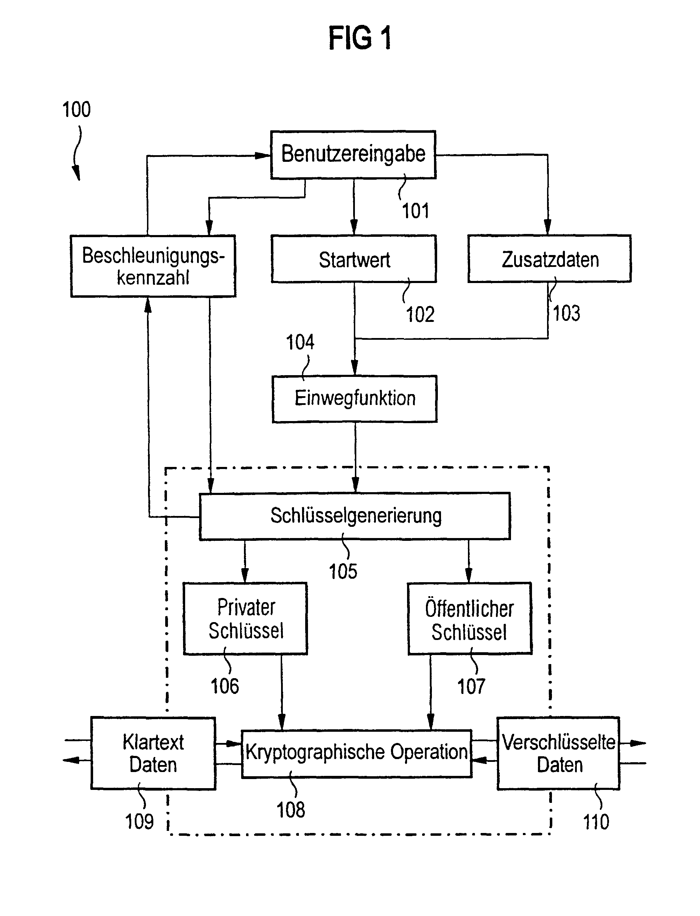

Ein Benutzer 280 gibt in einen ersten Rechner 200 ein beliebiges vorgebbares Wort (PIN, Paßwort), welches nur dem Benutzer bekannt ist, ein (Schritt 101, vgl. **Fig.1).**

Von dem ersten Rechner 200 wird gemäß dem RSA-Verfahren ein asymmetrisches kryptographisches Schlüsselpaar generiert, wie im folgenden beschrieben.

Der von dem Benutzer 280 eingegebene Wert 102 sowie Zusatzdaten 103, die den Benutzer 280 charakterisieren, zum Beispiel Benutzername, Personalnummer, Terminal-Adresse, etc. werden einer Hash-Funktion zugeführt (Schritt 104).

Eine Übersicht über Hash-Funktionen ist in [3] zu finden. Unter einer Hash-Funktion ist eine Funktion zu verstehen, bei der es nicht möglich ist, zu einem gegebenen Funktionswert einen passenden Eingangswert zu berechnen. Ferner wird einer beliebig langen Eingangszeichenfolge eine Ausgangszeichenfolge fester Länge zugeordnet. Des weiteren können für die Hash-Funktion zusätzliche Eigenschaften gefordert werden. Eine solche zusätzliche Eigenschaft ist Kollisionsfreiheit, d.h. es darf nicht möglich sein, zwei verschiedene Eingangszeichenfolgen zu finden, die dieselbe Ausgangszeichenfolge ergeben.

Beispiele einer Hash-Funktion sind das Verfahren gemäß dem MD-2-Standard, das Verfahren gemäß dem MD-5-Standard, der Data Encryption Standard (DES), welcher ohne Verwendung eines Schlüssels durchgeführt wird, oder auch jede andere beliebige Hash-Funktion.

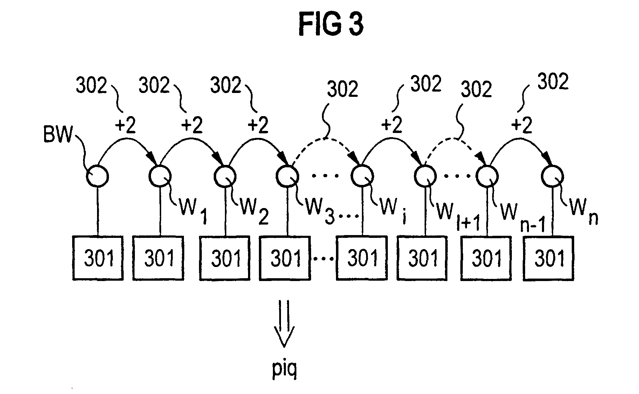

Der durch die Hash-Funktion gebildete Wert wird als Basiswert BW zur Bildung zweier Primzahlen verwendet, wie in **Fig.3** symbolisch dargestellt ist.

Wie in **Fig.3** dargestellt, wird ausgehend von dem Basiswert BW jeweils für einen Wert Wi (i = 1, ..., n) in einem iterativen Verfahren überprüft, ob der jeweilige Wert eine Primzahl darstellt oder nicht (Schritt 301).

Als Verfahren zur Überprüfung der Eigenschaft Prim für eine Zahl wird das Verfahren gemäß Miller-Rabin eingesetzt, welches in [4] beschrieben ist.

Wird für eine Zahl festgestellt, daß die Zahl keine Primzahl ist, so wird die Zahl um einen vorgebbaren Wert, vorzugsweise um den Wert 2 erhöht (Schritt 302) und der Test auf die Eigenschaft "Prim" wird wiederholt (Schritt 301). Dieses Vorgehen wird solange wiederholt, bis zwei Primzahlen, eine erste Primzahl p und eine zweite Primzahl q ermittelt worden sind.

Als Index wird eine Zahl bezeichnet, mit der angegeben wird, wie oft ausgehend von dem Basiswert PW die Zahl um den vorgegebenen Wert erhöht werden muß, bis man zu der ersten Primzahl p bzw. zu der zweiten Primzahl q gelangt.

Ergebnis des in **Fig.3** dargestellten Verfahrens sind zwei Primzahlen p und q, die zur Schlüsselgenerierung gemäß dem RSA-Verfahren (Schritt 105) eingesetzt werden.

Die Primzahlen p und q weisen üblicherweise eine Länge mehrerer 100 Bit auf.

Aus den Primzahlen p und q wird ein Modulus n gemäß folgender Vorschrift gebildet:

$$n = p * q. \tag{1}$$

Ferner wird eine Zwischengröße $\varphi(n)$ gemäß folgender Vorschrift gebildet:

$$\varphi(n) = (p-1) * (q-1). \tag{2}$$

Ein geheimer Schlüssel d wird nun derart gewählt, daß der geheime Schlüssel d tellerfremd zu $\varphi(n)$ ist. Ein öffentlicher Schlüssel e wird derart bestimmt, daß folgende Vorschrift erfüllt ist:

$$e * d \text{ mop } \varphi(n) = 1. \tag{3}$$

Der Wert d ist der geheime Schlüssel und darf keinem Dritten bekannt gemacht werden.

Somit ist durch die Schlusselgenerierung (Schritt 105) ein privater Schlüssel d (Schritt 106) und ein öffentlicher Schlüssel e (Schritt 107 gebildet worden.

Die beiden Schlüssel d, e bilden ein zueinander korrespondierendes kryptographisches Schlüsselpaar, welches für eine beliebige kryptographische Operation, d.h. zur Verschlüsselung, zur Entschlüsselung oder auch zur digitalen Signatur oder zur Authentifikation eingesetzt wird (Schritt 108).

Nach Bildung des Schlüsselpaares d, e gemäß dem oben beschriebenen Verfahren wird der geheime Schlüssel d gelöscht.

Der öffentliche Schlüssel e wird der Zertifizierungsinstanz 280 zugeführt. Von der Zertifizierungsinstanz 280 wird ein Zertifikat Certe über den öffentlichen Schlüssel e gebildet und das Zertifikat Certe des öffentlichen Schlüssels e wird in einem öffentlich zugänglichen Verzeichnis 290 gespeichert.

Somit kann jeder Kommunikationsteilnehmer in dem Kommunikationsnetz 280 auf den öffentlichen Schlüssel e über das Zertifikat Certe des öffentlichen Schlüssels e zugreifen.

Der geheime, zu dem öffentlichen Schlüssel e korrespondierende Schlüssel d ist in dem ersten Rechner 200 gelöscht.

Jedesmal, wenn der Benutzer 280 auf der Basis des Schlüsselpaares eine Kommunikation beginnen will, bzw. eine kryptographische Operation unter Verwendung eines solchen Schlüsselpaares durchführen will, gibt der Benutzer 208 in den ersten Rechner 200 seinen Startwert (PIN, Paßwort) ein und der Startwert 102 wird wie oben beschrieben wiederum mit Zusatzdaten 103 versehen, einer Hash-Funktion unterzogen (Schritt 104) und es werden entweder ausgehend von dem Basiswert BW zwei Primzahlen p und q ermittelt oder es wird ein gespeicherter Index, wie oben beschrieben, ausgelesen oder ebenfalls von dem Benutzer 280 eingegeben und daraus wird ein geheimer Kommunikationsschlüssel gebildet, der dem geheimen, zuvor gebildeten jedoch wieder gelöschten Schlüssel d entspricht.

Auf diese Weise ist ein Kommunikationsschlüsselpaar gebildet worden, welches den geheimen Kommunikationsschlüssel sowie den korrespondierenden öffentlichen Schlüssel e umfaßt. Damit kann jeweils für eine Kommunikationssitzung von einem Benutzer aktuell der geheime Kommunikationsschlüssel erzeugt werden, womit es möglich ist, starke Public-Key-Technologie einzusetzen, ohne den geheimen Schlüssel auf einer Chipkarte speichern zu müssen.

Das somit gebildete Kommunikationsschlüsselpaar d, e wird verwendet zur Verschlüsselung von Klartext 109 mit dem öffentlichen Schlüssel e und der Entschlüsselung der elektronischen, verschlüsselten Daten 110 mit dem geheimen Kommunikationsschlüssel.

Die Verarbeitung von Klartext 109, d.h. für jedermann lesbare elektronische Daten 109 sowie verschlüsselte elektronische Daten 110 sind in **Fig.1** symbolisch dargestellt, wobei die Kommunikationsrichtung jeweils durch einen Pfeil hin bzw. von dem Block, welcher eine kryptographische Operation 108 darstellt, beschreibt.

Die Verschlüsselung bzw. Entschlüsselung erfolgt gemäß folgenden Vorschriften:

$$m^e \bmod n = c, \qquad (4)$$

wobei mit

- m eine Menge von 512 Bit elektronischer Daten 109, die es zu verschlüsseln gilt,
- c verschlüsselte elektronische Daten 110,

bezeichnet werden.

Die Entschlüsselung der verschlüsselten elektronischen Daten c erfolgt gemäß folgender Vorschrift:

$$m = c^d \bmod n. \qquad (5)$$

Im weiteren werden einige Alternativen des oben dargestellten Ausführungsbeispiels erläutert:

Das Verfahren kann sowohl zur Verschlüsselung als auch zur Integritätssicherung oder auch zur digitalen Unterschrift elektronischer Daten eingesetzt werden.

Ferner kann die Erfindung im Bereich sicherer elektronischer Mail-Systeme eingesetzt werden.

Der Startwert 102 muß bei der Generierung des Schlüsselpaars zu Beginn des Verfahrens nicht unbedingt von dem Benutzer eingegeben werden, sondern er kann auch von einer zentralen Einheit, welche das Schlüsselpaar generiert, dem Benutzer vorgegeben werden.

Somit hat sich der Benutzer lediglich ein Paßwort bzw. eine PIN zu merken und es ist nicht mehr erforderlich, einen geheimen kryptographischen Schlüssel sicher zu speichern, beispielsweise auf einer Chipkarte, was mit entsprechenden Risiken und mit erheblichem Aufwand verbunden ist.

Anstelle einer Hash-Funktion kann im Rahmen der Erfindung jede beliebige Einwegfunktion eingesetzt werden.

Im Rahmen dieses Dokuments wurden folgende Veröffentlichungen zitiert.

[1] C. Ruland, Informationssicherheit in Datennetzen, ISBN 3-89238-081-3, DATACOM-Verlag, S. 79 - 85, 1993

[2] D. Longley und M. Shain, Data & Computer Security, Dictionary of standards concepts and terms, Stockton Press, ISBN 0-333-42935-4, S. 317, 1987

[3] C. Ruland, Informationssicherheit in Datennetzen, ISBN 3-89238-081-3, DATACOM-Verlag, S. 68 - 73, 1993

[4] A. J. Menezes, P. van Oorschot and S. Vanstone, Handbook of Applied Cryptography, CRC Press, ISBN 0-8493-8523-7, S. 138 - 140, 1997

**Patentansprüche**

1. Verfahren zur Bildung eines geheimen Kommunikationsschlüssels zu einem zuvor ermittelten asymmetrischen kryptographischen Schlüsselpaar, welches einen geheimen Schlüssel sowie einen korrespondierenden öffentlichen Schlüssel umfaßt, durch einen Rechner,

a) bei dem bei der Ermittlung des Schlüsselpaars ein vorgebbarer Startwert verwendet wurde,
b) bei dem der Startwert einem Benutzer zur Verfügung gestellt wird,
c) bei dem der Benutzer den Startwert in den Rechner eingibt,
d) bei dem unter Verwendung des Startwerts der geheime Kommunikationsschlüssel gebildet wird, wobei der geheime Kommunikationsschlüssel und der öffentliche Schlüssel ein asymmetrisches kryptographisches Kommunikationsschlüsselpaar bilden.

2. Verfahren nach Anspruch 1,
bei dem der Startwert einer Hash-Funktion zugeführt wird und der durch die Hash-Funktion gebildete Wert bei der Ermittlung des Schlüsselpaars sowie des Kommunikationsschlüsselpaars verwendet wird.

3. Verfahren nach Anspruch 1 oder 2,
bei dem bei der Bildung des Schlüsselpaars und des Kommunikationsschlüsselpaars Zusatzdaten, die den Benutzer charakterisieren, verwendet werden.

4. Verfahren nach einem der Ansprüche 1 bis 3,

- bei dem ausgehend von dem Startwert eine Primzahl ermittelt wird, wobei jeweils in einem iterativen Verfahren solange daraufhin geprüft wird, ob die jeweils überprüfte Zahl eine Primzahl ist und wenn dies der Fall ist, ein Index gespeichert wird, mit dem eine Anzahl von Zahlen bezeichnet wird, die auf ihre Eigenschaft hin, ob sie eine Primzahl sind, überprüft worden sind, gespeichert wird,
- sonst eine weitere Zahl ausgehend von der überprüften Zahl ausgewählt wird und der Index um eine vorgegebene Zahl erhöht wird,
- bei dem nach der Bildung des Kommunikationsschlüsselpaars die verwendete Primzahl gelöscht wird,
- bei dem bei der neuen Bildung eines Kommunikationsschlüsselpaars jeweils der Index und der Startwert verwendet werden zur Bildung des geheimen Kommunikationsschlüssels.

5. Verfahren nach Anspruch 4,
bei dem der Test, ob eine Zahl eine Primzahl ist, gemäß dem Verfahren nach Miller-Rabin erfolgt.

6. Verfahren nach einem der Ansprüche 1 bis 5,
bei dem die Schlüssel gemäß dem RSA-Verfahren gebildet werden.

7. Verfahren nach einem der Ansprüche 2 bis 6,
bei dem die Hash-Funktion eines der folgenden Verfahren ist:

- MD-5-Verfahren,
- MD-2-Verfahren,
- das Verfahren gemäß dem Data Encryption Standard (DES) als Einweg-Funktion.

8. Verfahren nach einem der Ansprüche 1 bis 7,
eingesetzt zur Verschlüsselung elektronischer Daten mit dem geheimen Kommunikationsschlüssel.

9. Verfahren nach einem der Ansprüche 1 bis 7,
eingesetzt zur Bildung einer digitalen Signatur über elektronische Daten unter Verwendung des geheimen Kommunikationsschlüssels.

10. Verfahren nach einem der Ansprüche 1 bis 7,
eingesetzt zur Authentifikation unter Verwendung des geheimen Kommunikationsschlüssels.

11. Anordnung zur Bildung eines geheimen Kommunikationsschlüssels zu einem zuvor ermittelten asymmetrischen kryptographischen Schlüsselpaar, welches einen geheimen Schlüssel sowie einen korrespondierenden öffentlichen Schlüssel umfaßt, mit einem Prozessor, der derart eingerichtet ist, daß folgende Schritte durchführbar sind:

- das Schlüsselpaar wurde unter Verwendung eines vorgebbaren Startwerts ermittelt,
- der Startwert wird einem Benutzer zur Verfügung gestellt,
- der Startwert wird von dem Benutzer in den Rechner eingegeben,
- unter Verwendung des Startwerts wird der geheime Kommunikationsschlüssel gebildet, wobei der geheime Kommunikationsschlüssel und der öffentliche Schlüssel ein Kommunikationsschlüsselpaar bilden, und

mit einem Eingabemittel zur Eingabe des Startwerts durch den Benutzer.

12. Anordnung nach Anspruch 11,
bei der der Prozessor derart eingerichtet ist, daß der Startwert einer Hash-Funktion zugeführt wird und der durch die Hash-Funktion gebildete Wert bei der Ermittlung des Schlüsselpaars sowie des Kommunikationsschlüsselpaars verwendet wird.

13. Anordnung nach Anspruch 11 oder 12,
bei der der Prozessor derart eingerichtet ist, daß bei der Bildung des Schlüsselpaars und des Kommunikationsschlüsselpaars Zusatzdaten, die den Benutzer charakterisieren, verwendet werden.

**14.** Anordnung nach einem der Ansprüche 11 bis 13, bei der der Prozessor derart eingerichtet ist, daß

- ausgehend von dem Startwert eine Primzahl ermittelt wird, wobei jeweils in einem iterativen Verfahren solange daraufhin geprüft wird, ob die jeweils überprüfte Zahl eine Primzahl ist und wenn dies der Fall ist, ein Index gespeichert wird, mit dem eine Anzahl von Zahlen bezeichnet wird, die auf ihre Eigenschaft hin, ob sie eine Primzahl sind, überprüft worden sind, gespeichert wird,
- sonst eine weitere Zahl ausgehend von der überprüften Zahl ausgewählt wird und der Index um eine vorgegebene Zahl erhöht wird,
- nach der Bildung des Kommunikationsschlüsselpaars die verwendete Primzahl gelöscht wird,
- bei der neuen Bildung eines Kommunikationsschlüsselpaars jeweils der Index und der Startwert verwendet werden zur Bildung des geheimen Kommunikationsschlüssels.

**15.** Anordnung nach Anspruch 14, bei der der Prozessor derart eingerichtet ist, daß der Test, ob eine Zahl eine Primzahl ist, gemäß dem Verfahren nach Miller-Rabin erfolgt.

**16.** Anordnung nach einem der Ansprüche 11 bis 15, bei der der Prozessor derart eingerichtet ist, daß die Schlüssel gemäß dem RSA-Verfahren gebildet werden.

**17.** Anordnung nach einem der Ansprüche 12 bis 16, bei der der Prozessor derart eingerichtet ist, daß die Hash-Funktion eines der folgenden Verfahren ist:

- MD-5-Verfahren,
- MD-2-Verfahren,
- das Verfahren gemäß dem Data Encryption Standard (DES) als Einweg-Funktion.

**18.** Anordnung nach einem der Ansprüche 11 bis 17, eingesetzt zur Verschlüsselung elektronischer Daten mit dem geheimen Kommunikationsschlüssel.

**19.** Anordnung nach einem der Ansprüche 11 bis 17, eingesetzt zur Bildung einer digitalen Signatur über elektronische Daten unter Verwendung des geheimen Kommunikationsschlüssels.

**20.** Anordnung nach einem der Ansprüche 11 bis 17, eingesetzt zur Authentifikation unter Verwendung des geheimen Kommunikationsschlüssels.

**Claims**

**1.** Method for forming a secret communication key by a computer for a predetermined asymmetric cryptographic key pair which includes a secret key and a corresponding public key,

a) wherein a pre-settable initial value was used in determining the key pair,

b) wherein the initial value is made available to a user,

c) wherein the user enters the initial value into the computer,

d) wherein using the initial value the secret communication key is formed, wherein the secret communication key and the public key form an asymmetric cryptographic communication key pair.

**2.** Method according to claim 1, wherein the initial value is supplied to a hash function and the value formed by the hash function is used in the determination of both the key pair and the communication key pair.

**3.** Method according to claim 1 or 2, wherein in the formation of the key pair and the communication key pair additional data is used characterizing the user.

**4.** Method according to one of claims 1 to 3, wherein starting from the initial value a prime number is determined, wherein it is tested in a respective iterative method whether the respectively tested number is a prime number, and wherein, if this is the case, an index is stored, with which a count of numbers which were tested as to their characteristic whether they are a prime number is designated,

- otherwise a further number starting from the tested number is selected and the index is increased by a predetermined number,
- wherein after the formation of the communication key pair the used prime number is deleted,
- wherein in the new formation of a communication key pair both the index and the initial value are used for forming a secret communication key.

**5.** Method according to claim 4, wherein the test whether a number is a prime number is performed according to the method of Miller-Rabin.

**6.** Method according to one of claims 1 to 5, wherein the keys are formed according to the RSA method.

**7.** Method according to one of claims 2 to 6, wherein the hash function is one of the following methods:

- MD-5 method,
- MD-2 method,
- method according to the data encryption standard (DES) as a one-way function.

**8.** Method according to one of claims 1 to 7, used for encrypting electronic data using the secret communication key.

**9.** Method according to one of claims 1 to 7, used for forming a digital signature via electronic data using the secret communication key.

**10.** Method according to one of claims 1 to 7, used for an authentication using the secret communication key.

**11.** Arrangement for forming a secret communication key for a predetermined asymmetric cryptographic key pair, which includes a secret key and a corresponding public key, having a processor which is implemented such that the following steps may be performed:

- the key pair was determined using a pre-settable initial value,
- the initial value is made available to a user,
- the initial value is entered into the computer by the user,
- using the initial value the secret communication key is formed, wherein the secret communication key and the public key form a communication key pair, and

with input means for the input of the initial value by the user.

**12.** Arrangement according to claim 11, in which the processor is implemented such that the initial value is supplied to a hash function and the value formed by the hash function is used when determining the key pair and the communication key pair.

**13.** Arrangement according to claim 11 or 12, wherein the processor is implemented such that during the formation of the key pair and the communication key pair additional data is used characterizing the user.

**14.** Arrangement according to one of claims 11 to 13, wherein the processor is implemented such that

- starting from the initial value a prime number is determined, wherein it is tested in a respective iterative method whether the respectively tested number is a prime number, and wherein, if this is the case, an index is stored, with which a count of numbers which were tested as to their characteristic whether they are a prime number is designated,
- otherwise a further number is selected starting from the tested number and the index is increased by a predetermined number,
- after the formation of the communication key pair the used prime number is deleted,
- in the new formation of a communication key pair both the index and the initial value are used for forming the secret communication key.

**15.** Arrangement according to claim 14, in which the processor is implemented such that the test whether a number is a prime number is performed according to the method of Miller-Rabin.

**16.** Arrangement according to one of claims 11 to 15, in which the processor is implemented such that the keys are formed according to the RSA method.

**17.** Arrangement according to one of claims 12 to 16, in which the processor is implemented such that the hash function is one of the following methods:

- MD-5 method,
- MD-2 method,
- the method according to the data encryption standard (DES) as a one-way function.

**18.** Arrangement according to one of claims 11 to 17, used for encrypting electronic data with the secret communication key.

**19.** Arrangement according to one of claims 11 to 17, used for forming a digital signature over electronic data using the secret communication key.

**20.** Arrangement according to one of claims 11 to 17, used for an authentication using the secret communication key.

**Revendications**

**1.** Procédé de formation d'une clé de communication confidentielle afin d'obtenir une paire de clés cryptographiques asymétriques prédéterminées, qui comporte une clé confidentielle ainsi qu'une clé publique correspondante, au moyen d'un ordinateur dans lequel

(a) une valeur de départ déterminable à l'avance a été utilisée lors de la détermination de la paire de clés,

(b) la valeur de départ est mise à la disposition d'un utilisateur,

(c) l'utilisateur entre la valeur de départ dans l'ordinateur,

(d) la clé de communication confidentielle est formée en utilisant la valeur de départ, la clé de communication confidentielle et la clé publique formant une paire de clés de communication cryptographiques asymétriques.

2. Procédé selon la revendication 1, dans lequel la valeur de départ est amenée à une fonction de Hash et la valeur formée par la fonction de Hash est utilisée lors de la détermination de la paire de clés ainsi que de la paire de clés de communication.

3. Procédé selon la revendication 1 ou 2, dans lequel il est utilisé des données supplémentaires, qui caractérisent l'utilisateur, lors de la formation de la paire de clés et de la paire de clés de communication.

4. Procédé selon l'une des revendications 1 à 3, dans lequel

un nombre premier est déterminé à partir de la valeur de départ, en vérifiant à chaque fois dans un procédé itératif si le nombre vérifié à chaque fois est un nombre premier et, si c'est le cas, en mémorisant un index permettant de spécifier une multitude de nombres vérifiant la propriété d'être un nombre premier,

un autre nombre est choisi à partir du nombre vérifié et l'index est incrémenté d'un nombre prédéterminé,

le nombre premier utilisé est effacé après la formation de la paire de clés de communication,

l'index et la valeur de départ sont utilisés lors de la nouvelle formation d'une paire de clés de communication pour former la clé de communication confidentielle.

5. Procédé selon la revendication 4, dans lequel le test consistant à vérifier si un nombre est premier est effectué conformément au procédé de Miller-Rabin.

6. Procédé selon l'une des revendications 1 à 5, dans lequel les clés sont formés conformément au procédé RSA.

7. Procédé selon l'une des revendications 2 à 6, dans lequel la fonction de Hash est l'un des procédés suivant :

- Procédé MD-5,
- Procédé MD-2
- le procédé Data Encryption Standard (DES) comme fonction monovoie.

8. Procédé selon l'une des revendications 1 à 7, utilisé pour verrouiller des données électroniques avec la clé de communication confidentielle.

9. Procédé selon l'une des revendications 1 à 7, utilisé pour former une signature numérique relative à des données électroniques en utilisant la clé de communication confidentielle.

10. Procédé selon l'une des revendications 1 à 7, utilisé pour l'authentification en utilisant la clé de communication confidentielle.

11. Dispositif de formation d'une clé de communication confidentielle afin d'obtenir une paire de clés cryptographiques asymétriques prédéterminées qui comporte une clé confidentielle ainsi qu'une clé publique correspondante, comportant un processeur qui est agencé de façon à mettre en oeuvre les étapes suivantes :

- la paire de clés a été déterminée en utilisant une valeur de départ déterminable à l'avance,
- la valeur de départ est mise à la disposition de l'utilisateur,
- la valeur de départ est entrée dans l'ordinateur par l'utilisateur, la clé de communication confidentielle et la clé publique formant une paire de clés de communication, et

un moyen d'entrée permettant à l'utilisateur d'entrer la valeur de départ.

12. Dispositif selon la revendication 11, dans lequel le processeur est agencé de telle sorte que la valeur de départ est amenée à une fonction de Hash et la valeur formée par la fonction de Hash est utilisée lors de la détermination de la paire de clés ainsi que de la paire de clés de communication.

13. Dispositif selon la revendication 11 ou 12, dans lequel le processeur est agencé de telle sorte qu'il est utilisé des données supplémentaires, qui caractérisent l'utilisateur, lors de la formation de la paire de clés et de la paire clés de communication.

14. Dispositif selon l'une des revendications 11 à 13, dans lequel le processeur est agencé de telle sorte que

- un nombre premier est déterminé à partir de la valeur de départ, en vérifiant à chaque fois dans un procédé itératif si le nombre vérifié à chaque fois est un nombre premier et, si c'est le cas, en mémorisant un index permettant de spécifier une multitude de nombres vérifiant la propriété d'être un nombre premier,
- un autre nombre est choisi à partir du nombre vérifié et l'index est incrémenté d'un nombre prédéterminé,
- le nombre premier utilisé est effacé après la formation de la paire de clés de communication,
- l'index et la valeur de départ sont utilisés lors de la nouvelle formation d'une paire de clés de communication pour former la clé de communication confidentielle.

15. Dispositif selon la revendication 14, dans lequel le processeur est agencé de telle sorte que le test consistant à vérifier si un nombre est premier est effectué conformément au procédé de Miller-Rabin.

16. Dispositif selon l'une des revendications 11 à 15, dans lequel le processeur est agencé de telle sorte que les clés sont formées conformément au procédé RSA.

17. Dispositif selon l'une des revendications 12 à 16, dans lequel le processeur est agencé de telle sorte que la fonction de Hash est l'un des procédés suivant :

- Procédé MD-5,
- Procédé MD-2
- le procédé Data Encryption Standard (DES) comme fonction monovoie.

18. Dispositif selon l'une des revendications 11 à 17, utilisé pour verrouiller des données électroniques avec la clé de communication confidentielle.

19. Dispositif selon l'une des revendications 11 à 17, utilisé pour former une signature numérique relative à des données électroniques en utilisant la clé de communication confidentielle.

20. Dispositif selon l'une des revendications 11 à 17, utilisé pour l'authentification en utilisant la clé de communication confidentielle.

# FIG 1

100

Benutzereingabe
101

Beschleunigungskennzahl

Startwert
102

Zusatzdaten
103

104

Einwegfunktion

Schlüsselgenerierung
105

Privater
Schlüssel
106

Öffentlicher
Schlüssel
107

Klartext
Daten
109

Kryptographische Operation
108

Verschlüsselte
Daten
110

# FIG 2

# FIG 3